# EUROPEAN PATENT APPLICATION

(11) **EP 1 853 054 A1**
(43) Date of publication of application: **07.11.2007**
(21) Application number: 07105024.9
(22) Date of filing: 27.03.2007
(51) Int. Cl.: H04M 3/493

(54) **Method for an interactive voice response system**

(30) Priority: 03.05.2006 TR 200602172
(71) Applicant: Fonoklik Iletisim Hizmetleri Ve Ticaret Anonim, 34394 Istanbul (TR)
(72) Inventor: Yurekli, Ahmet FONOKLIK ILETISIM HIZMETLERI VE TICARET ANONIM SIR, Maslak 34398, ISTANBUL (TR); Gorsev, Pinar FONOKLIK ILETISIM HIZMETLERI VE TICARET ANONIM SIR, 34394, ISTANBUL (TR); Yurekli, Oya FONOKLIK ILETISIM HIZMETLERI VE TICARET ANONIM SIR, 34394, ISTANBUL (TR)
(74) Representative: Berkkam, Ayfer

(57) **Abstract**

The present invention relates to an application method in which the caller answers the questions through an automatic interactive voice response IVR system (3) using DTMF signals and/or natural language speech recognition, the questions being asked by the company to which is applied, after which the operator listens to the answers and provides a written form of the application and then the server sends the result of the application to the caller in a couple of minutes.

## Description

**Technical Field**

The present invention relates to an application method in which the caller answers the questions through an automatic interactive voice response (IVR) system using DTMF signals and/or natural language speech recognition, the questions being asked by the company to which is applied, after which the operator listens to the answers and provides a written form of the application and then the server sends the result of the application to the caller in a couple of minutes.

**Prior Art**

Interactive Voice Response (IVR) system is well known in the state of the art, which greets a caller with a pre-recorded voice prompt and allows a caller to select options from a voice menu and to press a number on a telephone keypad to select an option and then audibly provides the information the caller wants. Basically the IVR system greets the caller, recites select options, and interprets the caller's response via DTMF tones and allow the caller reach information on one or more database. Sound recording is also possible for receiving more complicated data, and the data inconvenient for dialing since it is not practically feasible to dial the address, occupation etc.

Also another system called ASR (Automated Speech Recognition) is used for automatically transforming oral responses of the caller into written texts. But the operation is totally automatic in this method. Prerequisite for implementing said method is to define the would-be-necessary words in the system beforehand. For instance the answer to the question "The city you were born in" should be one of the cities that are defined in the list of cities in Turkey in the system. And the list of the defined words should be limited for a highly reliable authentication and these words should not substantially sound like each other.

EP1093067 discloses a system in which the information received through telephone call is printed out upon being saved. However said method does not include a warning system when missing and/or incorrect information is received while the sound is being recorded.

GB2352933 is another application in the state of the art in which a telephone includes means for converting speech input by a user into DTMF tones which are transmitted over a voice channel to an interactive voice response (IVR) telephony application. However the said means is included within a telephone and not in the service provider.

**Brief Description of the Invention**

The object of the present invention is to provide an application method in which the customer makes his application by means of a mobile phone or a fixed phone using IVR system and which provides the customer the result of his application through IVR via server in a couple of minutes.

**Detailed Description of the Invention**

The method according to the invention is illustrated in the accompanying figures in which:

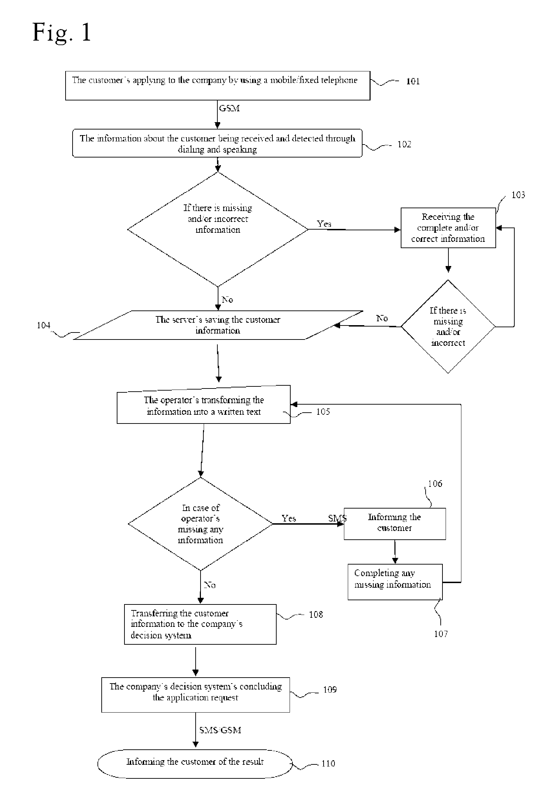

Figure 1 is a view of the flow chart of the application method according to the invention;

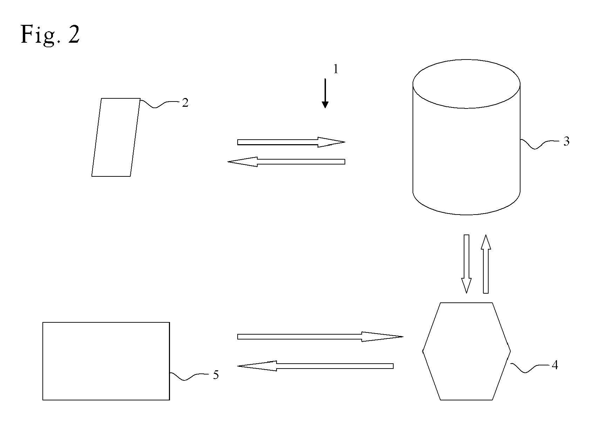

Figure 2 is a block diagram of the application method according to the invention.

The parts in these figures are each given reference numbers as follows:
1. Application method
2. Telephone
3. Server
4. Operator
5. The company's decision system

The application method (1) according to the invention comprises at least one mobile or fixed telephone (2) for making the application via IVR system by using natural language speech recognition and/or DTMF tones and for receiving the result of the application, at least one server (3) enabling communication between the company's decision system (5) and the caller and keeping the application information, at least one operator (4) converting application information received by the server (3) into a written text, and the company's decision system (5) to which the application is submitted, characterized in that said application method (1) comprises the following steps:
- The customer's applying to the company's decision system (5) IVR using a mobile/fixed telephone (2) (101),
- The information about the customer being received in the server by means of IVR through natural language speech recognition and DTMF tones and detected (102),
   The server's detecting the information provided by the customer by means of IVR, if there is missing and/or incorrect information;
   Receiving the complete and/or correct information (103), if there is missing and/or incorrect information and when it is provided,
   - The server's (3) saving the customer information (104),
   - The operator's (4) converting the application information into a written text (105),
   In case of operator's missing any information;
   Informing the customer via SMS or calling (106), completing any missing information (107), and if there is missing and/or incorrect information after it is provided,
   - Transferring the customer information to the company's decision system (108),
   - The company's decision system's (5) concluding the application request (109),
   - Informing the customer of the result (110) via SMS/GSM.

In a preferred embodiment of the invention, the caller uses a mobile phone (2) for making an application and the result of the application concluded by the company's decision system (5) is sent to the caller's mobile phone through SMS or IVR by the server in a couple of minutes. In another preferred embodiment of the invention if the customer makes his application via a fixed phone (2) the server (2) places a call to the caller's the fixed phone (2) number in a few minutes to provide the result of the application through IVR.

Authentication requirements of the answers provided via phone are defined in the server (3) beforehand, such as the number of digits and/or letters of the information, the potential minimum and/or maximum values thereof, minimum time for oral answers.

In case that the caller provides personal information through sending DTMF tones the server (3) distinguishes tones according to their frequencies and detects the dialed set of numbers and then checks the authentication of the answer and automatically decides whether to proceed to the next step.

In order to convert voices into a written text, the sound recording obtained with the help of the server (3) is sent to one of the operators' (4) computers via digital computer network for deciphering, the operator using a keypad, a screen, a computer and headphones connected thereto. The recording operator (4) listens to the information given by the caller on the headphones and types them up on a computer.

When the operator (4) has difficulty in understanding an answer he/she marks an option concerning the situation on the screen. And the server (3) sends an SMS to the caller's number and/or calls the number and requests the caller to call again if it is a mobile phone. And if it is a fixed phone (2) the server (3) calls the number and requests the caller to call again. When the system determines that a call is coming from the same number said system (4), after a security stage, asks again the questions it has missed before and being thus marked and then deciphering is repeated only for these answers.

When deciphering is complete all oral information are converted into a written text.

At this stage all the answers including the answers possibly provided through sending DTMF tones and IVR system are transferred to the company's decision system (5) to be assessed. The decision of the company's decision system (5) regarding the application is sent to the server (3) and the server (3) calls the caller's mobile phone (2) through the IVR system or sends SMS and informs him of the result in couple of minutes.

The application method (1) according to the invention, which both saves time and provides convenience, can be used in telephone banking, applications to any official institutions or private institutions and visa applications to embassies etc.

## Claims

1. An application method (1) according to the invention comprising at least one mobile or fixed telephone (2) for making the application via IVR system by using natural language speech recognition and/or DTMF tones and for receiving the result of the application, at least one server (3) enabling communication between the company's decision system (5) and the caller and keeping the application information, at least one operator (4) converting application information received by the server (3) into a written text, and the company's decision system (5) to which the application is submitted, **characterized in that** said application method (1) comprises the following steps: the customer's applying to the company's decision system (5) IVR using a mobile/fixed telephone (2) (101), the information about the customer being received in the server by means of IVR through natural language speech recognition and DTMF tones and detected (102), the server's detecting the information provided by the customer by means of IVR, if there is missing and/or incorrect information; receiving the complete and/or correct information (103), if there is missing and/or incorrect information and when it is provided, the server's (3) saving the customer information (104), the operator's (4) converting the application information into a written text (105), in case of operator's missing any information; informing the customer via SMS or calling (106), completing any missing information (107), and if there is missing and/or incorrect information after it is provided, transferring the customer information to the company's decision system (108), the company's decision system's (5) concluding the application request (109), informing the customer of the result (110) via SMS/GSM.

2. An application method (1) according to claim 1, **characterized in that** the result of the application concluded by the company's decision system (5) is sent to the caller's mobile phone (2), which he has used for applying, through SMS or IVR.

3. An application method (1) according to claim 1, **characterized in that** the result of the application concluded by the company's decision system (5) is provided to the customer by calling the customer's fixed phone (2), which he has used for applying, through IVR.

4. An application method (1) according to any of the preceding claims, **characterized in that** said application method (1) can be used in telephone banking, applications to any official institutions or private institutions and visa applications to embassies etc.
